(19) Europäisches Patentamt
European Patent Office
Office européen des brevets

(11) Veröffentlichungsnummer: **0 223 029**
**B1**

(12) **EUROPÄISCHE PATENTSCHRIFT**

(45) Veröffentlichungstag der Patentschrift: **05.09.90**

(51) Int. Cl.[5]: **A 01 N 57/20** // (A01N57/20, 47:36, 43:50)

(21) Anmeldenummer: **86113626.5**

(22) Anmeldetag: **02.10.86**

(60) **Teilanmeldung 89114861.1 eingereicht am 02/10/86.**

# (54) Herbizide Mittel.

(30) Priorität: **10.10.85 DE 3536126**
**02.05.86 DE 3614787**

(43) Veröffentlichungstag der Anmeldung:
**27.05.87 Patentblatt 87/22**

(45) Bekanntmachung des Hinweises auf die Patenterteilung:
**05.09.90 Patentblatt 90/36**

(84) Benannte Vertragsstaaten:
**AT BE DE FR GB GR IT NL**

(56) Entgegenhaltungen:
**EP-A-0 162 326**

(73) Patentinhaber: **HOECHST AKTIENGESELLSCHAFT**
**Postfach 80 03 20**
**D-6230 Frankfurt am Main 80 (DE)**

(72) Erfinder: **Bauer, Klaus, Dr.**
**Kolpingstrasse 7**
**D-6054 Rodgau (DE)**
Erfinder: **Bieringer, Hermann, Dr.**
**Eichenweg 26**
**D-6239 Eppstein/Taunus (DE)**
Erfinder: **Mildenberger, Hilmar, Dr.**
**Fasanenstrasse 24**
**D-6233 Kelkheim (Taunus) (DE)**
Erfinder: **Willms, Lothar, Dr.**
**Grüner Weg 4**
**D-5463 Unkel (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 223 029 B1

## Beschreibung

Gegenstand der vorliegenden Erfindung sind herbizide Mittel, dadurch gekennzeichnet, daß sie einen Wirkstoff der Formel I oder dessen Salz

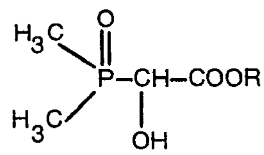

(I),

worin R = Wasserstoff oder Alkyl, das gegebenenfalls ein- oder mehrfach durch Halogen, Hydroxy, $(C_1—C_4)$-Alkoxy oder $(C_1—C_4)$-Alkoxy-carbonyl substituiert ist, bedeutet, in Kombination mit einer Verbindung der Formel II oder deren Salz

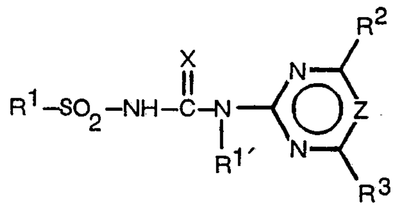

(II),

worin $R^1$ = $(C_1—C_4)$ Alkyl, $(C_2—C_6$ Alkenyl, $(C_2—C_6)$ Alkinyl, die halogeniert sein können, $(C_1—C_4)$ Alkylamino, Di$(C_1—C_4$-alkyl)amino, [N-$(C_1—C_4$-Alkylsulfonyl)-N-$(C_1—C_4$-alkyl)]amino, wobei die Alkylreste halogeniert sein können, Phenyl, Benzyl, Phenoxy, Pyrazolyl oder Thienyl, die alle durch $(C_1—C_4)$ Alkyl, $(C_2—C_6)$ Alkenyl, $(C_2—C_6)$ Alkinyl oder $(C_1—C_4)$ Alkoxy, die alle durch Halogen oder $(C_1—C_4$-Alkoxy)-carbonyl substituiert sein können, ferner durch Halogen, $CF_3$, Nitro, einen Rest der Formel —$COOR^4$, worin $R^4$ = H, $(C_1—C_4)$ Alkyl, $(C_2—C_6)$ Alkenyl, $(C_2—C_6)$ Alkinyl, $(C_1—C_4)$-Alkoxy-$(C_1—C_4)$alkyl oder Halogen $(C_1—C_4)$alkyl bedeutet, ferner durch einen Rest der Formel —$S(O)_nR^5$, worin $R^5$ = $(C_1—C_4)$ Alkyl, $(C_1—C_4)$ Alkoxy, Halogen-$(C_1—C_4)$alkyl, $(C_1—C_4)$ Alkoxy$(C_1—C_4)$alkyl, $(C_1—C_4)$ Alkoxy-carbonyl$(C_1—C_4)$alkyl, Di$(C_1—C_4$-alkyl)-amino, $(C_1—C_4)$ Alkylamino, $(C_1—C_4)$ Alkoxy-$(C_1—C_4)$alkylamino und n = 0,1 oder 2 bedeutet, substituiert sein können,

$R^{1'}$ = H, $(C_1—C_4)$Alkyl oder $(C_1—C_4)$Alkenyl

$R^2$, $R^3$ = unabhängig von einander $(C_1—C_4)$ Alkyl, $(C_1—C_4)$ Alkoxy, die beide gegebenenfalls ein- oder mehrfach durch Halogen, $(C_1—C_4)$ Alkoxy, $(C_1—C_4)$ Alkoxy-carbonyl substituiert sind, $(C_2—C_6)$ Alkenyl, $(C_2—C_6)$ Alkinyl, $(C_2—C_6)$ Alkenyloxy, $(C_2—C_6)$ Alkinyloxy oder Halogen,

X = O, S oder $NR^6$ mit $R^6$ = $(C_1—C_4)$ Alkyl oder $(C_1—C_4)$ Alkoxy und

Z = CH oder N bedeuten, wobei Verbindungen mit $R^1$ = ortho-2-[$(C_1—C_4)$-Alkoxy)carbonyl]-phenyl, $R^{1'}$ = H und

$R^2$, $R^3$ = $(C_1—C_2)$ Alkyl oder $(C_1—C_2)$ Alkoxy ausgeschlossen sind, enthalten.

Die Verbindungen der Formel I sind in DE—OS 3 238 958 beschrieben. Bevorzugt unter den Verbindungen der Formel I sind die Wirkstoffe, für die R = H oder $(C_1—C_4)$Alkyl bedeutet sowie deren Salze, insbesondere der Wirkstoff mit R = H (Ia) oder dessen Salz, vorzugsweise das Na-(Ib) oder K-Salz(Ic).

Bevorzugt unter den Verbindungen von Formel II sind:

Typ 1: Alkylaminosulfonylharnstoffe der obengenannten Formel II, worin $R^1$ = [N-$(C_1—C_4)$Alkylsulfonyl)-N-$(C_1—C_4)$-alkyl)]amino, wobei die Alkylreste jeweils halogeniert sein können, und X = O bedeuten, s. EP—A 131 258; insbesondere von Bedeutung ist hiervon die Verbindung IIa, worin $R^{1'}$ = H, $R^1$ = $(CH_3SO_2)(CH_3)N$—, $R^2$, $R^3$ = $OCH_3$ und Z = CH bedeuten.

Typ 2: Pyrazolylsulfonylharnstoffe der obengenannten Formel II, worin $R^1$ = einen Rest der Formel

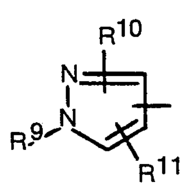

worin

$R^9$ = H oder $(C_1—C_4)$-Alkyl,

$R^{10}$ = H, $(C_1—C_4)$ Alkyl, $(C_1—C_4)$ Alkoxy, einen Rest der Formel —$COOR^4$ oder —$S(O)_nR^{5'}$, worin $R^{5'}$ = $(C_1—C_4)$ Alkyl, $(C_1—C_4)$ Alkoxy, Halogen-$(C_1—C_4)$alkyl, $(C_1—C_4)$-Alkylamino oder Di$(C_1—C_4$-alkyl)amino und

$R^{11}$ = H, Halogen, $(C_1—C_4)$ Alkyl oder $(C_1—C_4)$ Alkoxy, die beide halogeniert sein können und X = O bedeuten, s. EP—A—87 780.

Von diesen Verbindungen sind erfindungsgemäß insbesondere geeignet

Verbindung

IIb: $R^{1'}$ = H, $R^1$ = 1,3,5-Trimethyl-pyrazol-4-yl, X = O, $R^2$ = $CH_3$, $R^3$ = $OCH_3$ und Z = N

IIc: $R^{1'}$ = H, $R^1$ = 1,3,5-Trimethyl-pyrazol-4-yl, X = 0, $R^2$ = $CH_3$, $R^3$ = $OCH_3$ und Z = CH
IId: $R^{1'}$ = H, $R^1$ = 1,3,5-Trimethyl-pyrazol-4-yl, X = 0, $R^2$ = $R^3$ = $CH_3$ und Z = CH
IIe: $R^{1'}$ = H, $R^1$ = 5-Chloro-1,3-dimethyl-pyrazol-4-yl, X = O, $R^2$ = $CH_3$, $R^3$ = $OCH_3$ und Z = N
IIf: $R^{1'}$ = H, $R^1$ = 5-Chloro-1,3-dimethyl-pyrazol-4-yl, X = O, $R^2$ = $CH_3$, $R^3$ = $OCH_3$ und Z = CH
IIg: $R^{1'}$ = H, $R^1$ = 5-Chloro-1,3-dimethyl-pyrazol-4-yl, X = O, $R^2$ = $R^3$ = $CH_3$ und Z = CH
IIh: $R^{1'}$ = H, $R^1$ = 1,5-Dimethyl-pyrazol-4-yl, X = O, $R^2$ = $R^3$ = $OCH_3$ und Z = CH
IIi: $R^{1'}$ = H, $R^1$ = 1,3-Dimethyl-5-difluoromethoxy-pyrazol-4-yl, X = O, $R^2$ = $CH_3$, $R^3$ = $OCH_3$ und Z = CH
IIk: $R^{1'}$ = H, $R^1$ = 4-Ethoxycarbonyl-1-methyl-pyrazol-5-yl, X = O, $R^2$ = $R^3$ = $CH_3$ und Z = CH
IIm: $R^{1'}$ = H, $R^1$ = 4-Ethoxycarbonyl-1-methyl-pyrazol-5-yl, X = O, $R^2$ = $R^3$ = $OCH_3$ und Z = CH

Typ 3: Thienylsulfonylharnstoffe der obengenannten Formel II, worin
$R^1$ = einem Rest der Formel

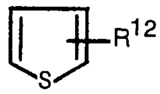 ,

worin
$R^{12}$ = H, Halogen, ($C_1$—$C_4$) Alkyl, ($C_2$—$C_4$) Alkenyl oder ($C_1$—$C_4$) Alkoxy, wobei alle drei letztgenannten Reste halogeniert sein können, einen Rest der Formel —$COOR^{4'}$, mit $R^{4'}$ = H, ($C_1$—$C_4$) Alkyl oder ($C_2$—$C_6$) Alkenyl, oder einen Rest der Formel —$S(O)_n$—$R^{5'}$ und X = O bedeuten, s. US—PS 4,431,029, JP—A 60197676, JP—A 60139691, JP—A 60 193 983.

Beispielsweise seien von diesen Verbindungen genannt die Verbindungen
IIn: $R^1$ = 2-Methoxycarbonyl-3-thienyl, $R^{1'}$ = H, X = O, $R^2$ = $OCH_3$, $R^3$ = $CH_3$ und Z = N
IIo: $R^1$ = 3-(Pentafluor-1-propenyl)-2-thienyl, $R^{1'}$ = H, X = O, $R^2$, $R^3$ = $OCH_3$, Z = N oder CH
IIp: $R^1$ = 3-(2-Chlor-1,2-difluorethenyl)-2-thienyl, $R^{1'}$ = H, X = O, $R^{2'}$, $R^3$ = $OCH_3$, Z = N oder CH
IIq: $R^1$ = 3-(2-Chlor-1,2-difluorethenyl)-2-thienyl, $R^{1'}$ = H, X = O, $R^2$ = $CH_3$, $R^3$ = $OCH_3$, Z = N oder CH
IIr: $R^1$ = 3-(Pentafluor-1-propenyl)-2-thienyl, $R^{1'}$ = H, X = O, $R^2$ = $CH_3$, $R^3$ = $OCH_3$, Z = N oder CH

Typ 4: Phenyl-, Phenoxy- und Benzylsulfonylharnstoffe der Formel II, worin $R^1$ = Phenyl, Phenoxy oder Benzyl, die durch Halogen, ($C_1$—$C_4$) Alkyl oder ($C_1$—$C_4$) Alkoxy, die beide halogeniert sein können, einen Rest der Formeln —$COOR^4$ oder —$S(O)_nR^{5'}$ substituiert sein können und X = O bedeuten, s. EP—A 51 466, EP—A 113 956, EP—A 7687, US—PS 4,514,212

Hierunter seien beispielsweise genannt die Verbindungen
IIs: $R^{1'}$ = H, $R^1$ = 2-Ethoxycarbonyl-phenyl, X = O, $R^2$ = Cl, $R^3$ = $OCH_3$ und Z = CH
IIt: $R^{1'}$ = H, $R^1$ = 2-Methoxycarbonyl-phenylmethyl, X = O, $R^2$ = $R^3$ = $OCH_3$ und Z = CH
IIu: $R^{1'}$ = H, $R^1$ = 2-(2-Chlorethoxy)phenyl, X = O, $R^2$ = $CH_3$, $R^3$ = $OCH_3$ und Z = N
IIv: $R^{1'}$ = $CH_3$, $R^1$ = 2-Methoxycarbonyl-phenyl, X = O, $R^2$ = $CH_3$, $R^3$ = $OCH_3$ und Z = N
IIw: $R^{1'}$ = H, $R^1$ = 2-Methoxycarbonyl-phenylmethyl, X = O, $R^2$ = $CH_3$, $R^3$ = $OCH_3$ und Z = N
IIx: $R^{1'}$ = H, $R^1$ = 2-Methoxycarbonyl-benzyl, X = O, $R^2$, $R^3$ = $OCH_3$, Z = CH

Die erfindungsgemäßen Kombinationen erfassen auch die für die Landwirtschaft einsetzbaren Salze der Verbindungen der Formeln I und II.

Als solche kommen beispielsweise die üblichen Alkali-, Erdalkali-, Ammonium-, substituierten Ammonium-, Phosphonium- oder Sulfoniumsalze in Betracht. Unter den Alkali- und Erdalkalisalzen kommen in erster Linie die Na-, K-, Mg- oder Ca-Salze in Betracht.

Ferner umfaßt Formel I auch alle entsprechenden Stereoisomeren und deren Gemische, so daß diese ebenfalls unter die erfindungsgemäßen Kombinationen fallen.

Bevorzugt sind Kombinationen von Verbindungen der Formel I und Formel II, davon insbesondere Kombinationen der Verbindungen des Typs 1 und Typs 2.

Gegenstand der vorliegenden Erfindung sind auch Dreierkombinationen von Verbindungen der allgemeinen Formel I mit zwei verschiedenen Wirkstoffen der allgemeinen Formeln II.

Die beschriebenen Wirkstoffkombinationen zeigen überraschend hohe Wirksamkeiten, die größer sind als aufgrund der Wirkungen der Einzelkomponenten zu erwarten war.

Die erfindungsgemäßen Wirkstoffkombinationen erfassen ein breites Unkrautspektrum. Sie eignen sich beispielsweise zur Bekämpfung von annuellen und perennierenden Unkräutern wie beispielsweise Agropyron, Paspalum, Cynodon, Imperata, Pennisetum, Convolvulus, Cirsium, Rumex, Alopercurus, Lolium, Echinochloa und andere.

Die erfindungsgemäßen Kombinationen lassen sich zur selektiven Bekämpfung von Schadpflanzen in Plantagenkulturen wie Ölpalme, Kokospalme, Gummibaum, Zitrus, Ananas, Baumwolle, Kaffee, Kakao u.a. sowie im Obst- und Weinbau einsetzen. Ebenso können die erfindungsgemäßen Kombinationen im Ackerbau im sogenannten "no till" bzw. "zero till"- Verfahren eingesetzt werden. Sie können aber auch nichtselektiv auf Wegen, Plätzen, Industrieanlagen etc. angewendet werden, um diese Flächen von unerwünschtem Pflanzenwuchs freizuhalten.

Die Mischungsverhältnisse der Verbindungen der Formel I zu den Verbindungen der Formeln II können innerhalb weiter Grenzen insbesondere zwischen etwa 1000:1 bis 1:10 schwanken. Die Wahl des Mischungsverhältnisses ist abhängig von verschiedenen Parametern wie der Art der Mischungspartner, Entwicklungsstadium der Unkräuter und Unkrautspektrum. Vorzugsweise werden Mischungsverhältnisse

von 1:5 bis 100:1 (Formel I + Formel II (Typ 1)), 1:5 bis 500:1 (Formel I + Formel II (Typ 2)), 1:5 bis 100:1 (Formel I + Formel II Typ 3)) und 1:1 bis 1000:1 (Formel I + Formel II (Typ 4)) gewählt.

Die erfindungsgemäßen Kombinationen können sowohl in Form von Mischformulierungen — benetzbare Pulver, Emulsions- konzentrate — vorliegen, die dann in üblicher Weise mit Wasser verdünnt zur Anwendung gebracht werden; sie können aber auch als sogenannte Tankmischungen durch gemeinsame Verdünnung der getrennt formulierten Komponenten mit Wasser hergestellt werden.

Die Aufwandmengen des Herbizids der Formel I in den Wirkstoffmischungen variieren im allgemeinen zwischen 0,5 und 4,0 kg/ha, während die Aufwandmengen der Verbindungen der Formeln II im Bereich zwischen 0,001 und 2,0 kg/ha liegen können, speziell für

| | |
|---|---|
| Verbindungen der Formel II zwischen | 0,01 und 2,0 kg a.i./ha |
| Verbindungen Typ 1 zwischen | 0,01 und 1,0 kg a.i./ha |
| Verbindungen Typ 2 zwischen | 0,01 und 0,5 kg a.i./ha |
| Verbindungen Typ 3 zwischen | 0,01 und 0,5 kg a.i./ha |
| Verbindungen Typ 4 zwischen | 0,05 und 2,0 kg a.i./ha |

Die erfindungsgemäßen Mittel können in den üblichen, dem Fachmann gelaüfigen Zubereitungen, z.B. als benetzbare Pulver, Stäubemittel, Granulate, Dispersionskonzentrate, emulgierbare Konzentrate oder versprühbare Lösungen, in den Handel gebracht werden. Die formulierten Mittel enthalten dabei die Wirkstoffe im allgemeinen in Konzentrationen von 2 bis 95 Gew.-%.

Benetzbare Pulver sind in Wasser gleichmäßig dispergierbare Präparate, die neben den Wirkstoffen außer einem Verdünnungs- oder Inertstoff noch Netzmittel, z.B. polyoxethylierte Alkylphenole, polyoxethylierte Oleyl- oder Stearylamine, Alkyl- oder Alkylphenyl-sulfonate und Dispergiermittel, z.B. ligninsulfonsaures Natrium, dinaphthylmethandisulfonsaures Natrium oder auch oleylmethyltaurinsaures Natrium enthalten.

Emulgierbare Konzentrate werden durch Auflösen des Wirkstoffgemisches einem organischen Lösungsmittel, z.B. Butanol, Cyclohexanon, Dimethylformamid, Xylol oder auch höhersiedenden Aromaten und Zusatz eines nichtionischen Netzmittels, beispielwiese eines polyoxäthylierten Alkylphenols oder eines polyoxäthylierten Oleyl- oder Stearylamins, erhalten.

In benetzbaren Pulvern variiert die Gesamt-Wirkstoffkonzentration zwischen etwa 10% und 95%, der Rest besteht aus den oben angegebenen Formulierungszusätzen. Bei emulgierbaren Konzentration beträgt die Wirkstoffkonzentration etwa 10% bis 80%. Staubförmige Formulierungen enthalten meistens 5% bis 20% an Wirkstoffen, versprühbare Lösungen etwa 2% bis 20%. Bei Granulaten hängt der Wirkstoffgehalt zum Teil davon ab, in welcher Form (flüssig oder fest) die Wirkstoffe vorliegen und welche Granulierhilfsmittel, Füllstoffe usw. verwendet werden.

Zur Anwendung werden die handelsüblichen Konzentrate gegebenenfalls in üblicher Weise verdünnt, z.B. bei benetzbaren Pulvern und emulgierbaren Konzentraten mittels Wasser.

Staubförmige und granulierte Zubereitungen sowie versprühbare Lösungen werden vor der Anwendung nicht mehr mit weiteren inerten Stoffen verdünnt.

A. Formulierungsbeispiele

a) Ein Stäubemittel wird erhalten, indem man 10 Gewichtsteile Wirkstoffgemisch und 90 Gewichtsteile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoffgemisch, 64 Gewichtsteile kaolinhaltigen Quarz als Inertstoff, 10 Gewichtsteile ligninsulfonsaures Kalium und 1 Gewichtsteile oleylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoffgemisch mit 6 Gewichtsteilen Alkylphenolpolyglykolether (®Triton X 207), 3 Gewichtsteilen Isotridecanolpolyglykolether (8 AeO) und 71 Gewichtsteilen paraffinischem Mineralöl (Siedebereich z.B. ca. 255 bis über 377°C) mischt und in einer Reibkugelmühle auf eine Feinheit von unter 5 Mikron vermahlt.

d) Ein emulgierbares Konzentrat wird erhalten aus 15 Gewichtsteilen Wirkstoffgemisch, 75 Gewichtsteilen Cyclohexanon als Lösungsmittel und 10 Gewichtsteilen oxethyliertem Nonylphenol (10 AeO) als Emulgator.

B. Biologische Beispiele:

Der Nachweise des Synergismus in den nachfolgenden Beispielen ergibt sich aus dem Vergleich des aus den Wirkungen der Einzelkomponenten errechneten additiven Wirkungsgrads mit dem experimentell gefundenen Wirkungsgrad der Wirkstoffkombinationen. Die Errechnung des additiven Wirkungsgrades

erfolgt nach der Formel von S. R. Colby (vgl. Calculating synergistic and antagonistic responses of herbicide combinations, Weeds, *15*, 1967, S. 20 bis 22).

Diese Formel lautet:

$$E = X + Y - \frac{X \cdot Y}{100}$$

wobei

X = % Schädigung durch Herbizid A bei x kg/ha Aufwandmenge,

Y = % Schädigung durch Herbizid B bie y kg/ha Aufwandmenge,

E = % die erwartete Schädigung der Herbizide A + B bei x + y kg/ha Aufwandmenge bedeuten.

Ist die tatsächliche Schädigung größer als berechnet, so ist die Wirkung der Wirkstoffkombination mehr als additiv, d.h., es liegt ein synergistischer Effekt vor.

Beispiel 1

Samen vershiedener Ungräser und Unkräuter wurden in sandiger Lehmerde in Plastiktöpfen (Ø9 cm) ausgesät und unter guten Wachstumsbedingungen im Gewächshaus 3—4 Wochen angezogen. Anschließend wurden die als wäßrige Lösungen formulierten Verbindungen alleine sowie in Kombination in Form von versprühbaren Lösungen auf die oberirdischen Pflanzenteile gesprüht. Die verwendete Wassermenge entsprach dabei 400 l/ha.

Nach ca. 4—5 Wochen Standzeit im Bewächshaus unter optimalen Wachstumsbedingungen wurde die herbizide Wirkung visuell bonitiert. Die Ergebnisse sind in der nachfolgenden Tabelle zusammengefaßt.

Die theoretisch nach Colby zu erwartenden Wirkungen der Mischungen sind in Klammern jeweils hinter den beobachteten Wirkungen angegeben.

TABELLE 1

Herbizide Wirkung der Enzelwirkstoffe und der erfindungsgemäßen Mischungen

| Produkt (Bsp.-Nr) | Dosis (kg a.i./ha) | herbizide Wirkung in % ALM | LOM | ECG |
|---|---|---|---|---|
| Ia | 2,0 | 80 | 98 | 99 |
| | 1,0 | 70 | 93 | 98 |
| | 0,5 | 30 | 70 | 80 |
| | 0,25 | 0 | 10 | 10 |
| | 0,125 | 0 | 0 | 0 |
| IIa | 0,6 | 35 | 50 | 83 |
| | 0,3 | 20 | 20 | 75 |
| | 0,15 | 0 | 0 | 55 |
| IIc | 0,02 | 60 | 65 | 30 |
| | 0,01 | 60 | 60 | 15 |
| | 0,005 | 45 | 30 | 0 |
| IIe | 0,01 | 65 | 65 | 30 |
| | 0,005 | 50 | 40 | 10 |
| | 0,0025 | 50 | 10 | 0 |

TABELLE 1

| Produkt (Bsp.-Nr) | Dosis (kg a.i./ha) | | herbizide Wirkung in % | | |
|---|---|---|---|---|---|
| | | | ALM | LOM | ECG |
| IIi | 0,15 | | 70 | 70 | 75 |
| | 0,075 | | 70 | 50 | 70 |
| | 0,038 | | 65 | 40 | 35 |
| IIw | 0,01 | | 45 | 20 | 45 |
| | 0,005 | | 35 | 10 | 25 |
| | 0,0025 | | 10 | 0 | 10 |
| Ia + IIa | 0,5 | + 0,6 | 55(50) | 93(85) | 99(96) |
| | 0,25 | + 0,6 | 40(35) | 65(55) | 90(85) |
| Ia + IIa | 1,0 | + 0,3 | 90(76) | 97(94) | |
| | 0,5 | + 0,3 | 60(44) | 90(76) | |
| | 0,25 | + 0,3 | 30(20) | 55(28) | |
| Ia + IIa | 1,0 | + 0,15 | 83(70) | 95(93) | |
| | 0,5 | + 0,15 | 50(30) | 80(70) | 99(91) |
| | 0,25 | + 0,15 | 25( 0) | 35(10) | 70(60) |
| Ia + IIc | 0,5 | + 0,02 | | 98(89) | 98(86) |
| | 0,25 | + 0,02 | | 75(68) | 60(37) |
| | 0,125 | + 0,02 | | 70(65) | 60(30) |
| Ia + IIc | 0,5 | + 0,01 | | 98(88) | 90(83) |
| | 0,25 | + 0,01 | | 70(64) | 30(23) |
| Ia + IIc | 1,0 | + 0,005 | | 99(95) | |
| | 0,5 | + 0,005 | | 90(79) | |
| | 0,25 | + 0,005 | | 55(37) | |
| Ia + IIe | 0,5 | + 0,01 | 90(76) | 99(90) | 98(86) |
| | 0,25 | + 0,01 | 83(65) | 95(69) | 83(37) |
| | 0,125 | + 0,01 | 70(65) | 80(65) | 60(30) |
| Ia + IIe | 0,5 | + 0,005 | 85(65) | 99(82) | 100(82) |
| | 0,25 | + 0,005 | 80(50) | 88(46) | 75(19) |
| | 0,125 | + 0,005 | 65(50) | 75(40) | 50(10) |

TABELLE 1

| Produkt (Bsp.-Nr) | Dosis (kg a.i./ha) | | herbizide Wirkung in % ALM | LOM | ECG |
|---|---|---|---|---|---|
| Ia + IIe | 1,0 | + 0,0025 | 95(85) | | |
| | 0,5 | + 0,0025 | 90(65) | 97(73) | 99(80) |
| | 0,25 | + 0,0025 | 75(50) | 78(19) | 60(10) |
| | 0,125 | + 0,0025 | 60(50) | 40(10) | 30( 0) |
| Ia + IIi | 1,0 | + 0,15 | 95(91) | | |
| | 0,5 | + 0,15 | 90(79) | | 100(95) |
| | 0,25 | + 0,15 | 80(70) | | 93(77) |
| | 0,125 | + 0,15 | | | 90(75) |
| Ia + IIi | 0,5 | + 0,075 | 85(79) | | 100(94) |
| | 0,25 | + 0,075 | 80(70) | | 75(73) |
| | 0,125 | + 0,075 | 75(70) | | |
| Ia + IIi | 0,5 | + 0,038 | | | 97(87) |
| | 0,25 | + 0,038 | | | 70(41) |
| | 0,125 | + 0,038 | | | 70(35) |
| Ia + IIw | 2,0 | + 0,01 | 98(89) | | |
| | 1,0 | + 0,01 | 95(83) | | |
| | 0,5 | + 0,01 | 75(62) | 88(76) | 97(89) |
| | 0,25 | + 0,01 | 60(45) | 55(28) | 75(51) |
| | 0,125 | + 0,01 | 50(45) | 40(20) | 60(45 |
| Ia + IIw | 2,0 | + 0,005 | 98(87) | | |
| | 1,0 | + 0,005 | 95(81) | 99(94) | |
| | 0,5 | + 0,005 | 70(55) | 88(73) | 97(85) |
| | 0,25 | + 0,005 | 45(35) | 40(19) | 75(33) |
| | 0,125 | + 0,005 | | 20(10) | 45(25) |
| Ia + IIw | 2,0 | + 0,0025 | 98(82) | | |
| | 1,0 | + 0,0025 | 90(73) | 98(93) | |
| | 0,5 | + 0,0025 | 55(37) | 80(70) | 90(82) |
| | 0,25 | + 0,0025 | 30(10) | 20(10) | 40(19) |
| | 0,125 | + 0,0025 | 20(10) | | 20(10) |

Abkürzungen zur Tabelle 1:
ALM = Alopercurus myosuroides
LOM = Lolium multiforum
ECG = Echinochola crus-galli
a.i. = Aktivsubstanz

Die Ergebnisse zeigen, daß mit der Wirkstoffkombination eine unerwartet hohe herbizide Wirksamkeit erreicht wurde, die wesentlich besser ist, als auf Grund der Einzelwirkungen der Wirkstoffe nach Colby erwartet werden konnte.

Beispiel 2

Rhizome bzw. Wurzelstücke verschiedener Unkräuter wurden in sandiger Lehmerde in Töpfen von 13 cm Durchmesser ausgesät und im Gewächshaus bis zur Bestockung angezogen. Die als wäßrige Lösungen bzw. als Emulsionskonzentrate formulierten erfindungsgemäßen Kombinationen wurden in 400 l/ha auf die oberirdischen Grünteile der Versuchspflanzen gesprüht. Die Erfolgsbonitur wurde nach 4—5 Wochen durchgeführt.

Die Ergebnisse zeigten eine starke synergistische Wirkung der Kombinationen gegenüber perennierenden Unkräutern wie Cynodon dactylon (CND) und Agropyron repens (AGR) im Vergleich zu den Wirkungsgraden der Einzelwirkstoffe.

**Patentansprüche**

1. Herbizide Mittel, dadurch gekennzeichnet, daß sie einen Wirkstoff der Formel I oder dessen Salz

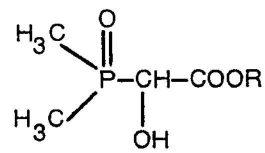 (I),

worin R = Wasserstoff oder Alkyl, das gegebenenfalls ein- oder mehrfach durch Halogen, Hydroxy, $(C_1—C_4)$-Alkoxy oder $(C_1—C_4)$-Alkoxy-carbonyl substituiert ist, bedeutet, in Kombination mit einer Verbindung der Formel II oder deren Salz

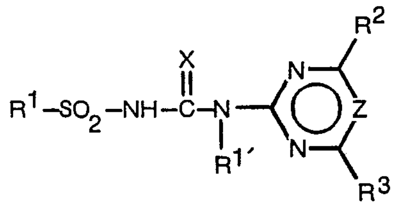 (II),

worin $R^1$ = $(C_1—C_4)$ Alkyl, $(C_2—C_6)$ Alkenyl, $(C_2—C_6)$ Alkinyl, die halogeniert sein können, $(C_1—C_4)$ Alkylamino, Di$(C_1—C_4$-alkyl)amino, [N-$(C_1—C_4$-Alkylsulfonyl)-N-$(C_1—C_4$-alkyl)]amino, wobei die Alkylreste halogeniert sein können, Phenyl, Benzyl, Phenoxy, Pyrazolyl oder Thienyl, die alle durch $(C_1—C_4)$ Alkyl, $(C_2—C_6)$ Alkenyl, $(C_2—C_6)$ Alkinyl oder $(C_1—C_4)$ Alkoxy, die alle durch Halogen oder $(C_1—C_4$-Alkoxy)-carbonyl substituiert sein können, ferner durch Halogen, $CF_3$, Nitro, einen Rest der Formel —$COOR^4$, worin $R^4$ = H, $(C_1—C_4)$ Alkyl, $(C_2—C_6)$ Alkenyl, $(C_2—C_6)$ Alkinyl, $(C_1—C_4)$-Alkoxy-$(C_1—C_4)$alkyl oder Halogen $(C_1—C_4)$alkyl bedeutet, ferner durch einen Rest der Formel —$S(O)_nR^5$, worin $R^5$ = $(C_1—C_4)$ Alkyl, $(C_1—C_4)$ Alkoxy, Halogen-$(C_1—C_4)$alkyl, $(C_1—C_4)$ Alkoxy$(C_1—C_4)$alkyl, $(C_1—C_4)$ Alkoxy-carbonyl$(C_1—C_4)$alkyl, Di$(C_1—C_4$-alkyl)-amino, $(C_1—C_4)$ Alkylamino, $(C_1—C_4)$ Alkoxy-$(C_1—C_4)$alkylamino und n = 0,1 oder 2 bedeutet, substituiert sein können,

$R^{1'}$ = H, $(C_1—C_4)$Alkyl oder $(C_1—C_4)$Alkenyl

$R^2$, $R^3$ = unabhängig von einander $(C_1—C_4)$ Alkyl, $(C_1—C_4)$ Alkoxy, die beide gegebenenfalls ein- oder mehrfach durch Halogen, $(C_1—C_4)$ Alkoxy, $(C_1—C_4)$ Alkoxy-carbonyl substituiert sind, $(C_2—C_6)$ Alkenyl, $(C_2—C_6)$ Alkinyl, $(C_2—C_6)$ Alkenyloxy, $(C_2—C_6)$ Alkinyloxy oder Halogen,

X = O, S oder $NR^6$ mit $R^6$ = $(C_1—C_4)$ Alkyl oder $(C_1—C_4)$ Alkoxy und

Z = CH oder N bedeuten, wobei Verbindungen mit $R^1$ = ortho-2-[$(C_1—C_4$-Alkoxy)carbonyl]-phenyl, $R^{1'}$ = H und

$R^2$, $R^3$ = $(C_1—C_2)$ Alkyl oder $(C_1—C_2)$ Alkoxy ausgeschlossen sind, enthalten.

2. Herbizide Mittel gemäß Anspruch 1, dadurch gekennzeichnet, daß sie einem Wirkstoff der Formel I sowie deren Salze, worin R = Wasserstoff oder $(C_1—C_4)$Alkyl bedeutet, in Kombination mit einer Verbindung der Formel II, worin $R^1$ = [N-$(C_1—C_4$-Alkylsulfonyl)-N-$(C_1—C_4$-alkyl)]amino; wobei die Alkylreste jeweils halogeniert sein können, einen Rest der Formeln

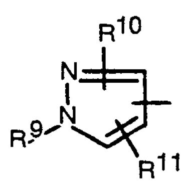 oder 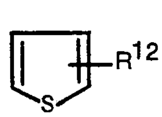 ,

Phenyl, Phenoxy oder Benzyl, die durch Halogen, $(C_1—C_4)$ Alkyl oder $(C_1—C_4)$ Alkoxy, die beide halogeniert

sein können, einen Rest der Formeln —$COOR^4$ oder —$S(O)_nR^{5'}$ substituiert sein können, bedeutet und worin

$R^9$ = H oder ($C_1$—$C_4$)-Alkyl

$R^{10}$ = H, ($C_1$—$C_4$) Alkyl, ($C_1$—$C_4$) Alkoxy, einen Rest der Formel —$COOR^4$ oder —$S(O)_nR^{5'}$,

$R^{5'}$ = ($C_1$—$C_4$) Alkyl, ($C_1$—$C_4$) Alkoxy, Halogen-($C_1$—$C_4$)alkyl, ($C_1$—$C_4$)-Alkylamino oder Di($C_1$—$C_4$-alkyl)-amino,

$R^{11}$ = H, Halogen, ($C_1$—$C_4$) Alkyl oder ($C_1$—$C_4$) Alkoxy, die beide halogeniert sein können, und

$R^{12}$ = H, Halogen, ($C_1$—$C_4$) Alkyl, ($C_2$—$C_4$) Alkenyl oder ($C_1$—$C_4$) Alkoxy, wobei alle drei letztgenannten Reste halogeniert sein können, einen Rest der Formel —$COOR^{4'}$, mit $R^{4'}$ = H, ($C_1$—$C_4$) Alkyl oder ($C_2$—$C_6$) Alkenyl, oder einen Rest der Formel —$S(O)_n$—$R^{5'}$ und

X = O bedeuten, enthalten.

3. Herbizide Mittel gemäß einem oder mehreren der Ansprüche 1 und 2, dadurch gekennzeichnet, daß sie als Wirkstoff das Na-Salz der Formel I in Kombination mit einer Verbindung der Formel II worin

$a_1$) $R^{1'}$ = H, $R^1$ = $(CH_3SO_2)(CH_3)N$—, $R^2$, $R^3$ = $OCH_3$ und Z = CH,

$a_2$) $R^{1'}$ = H, $R^1$ = 1,3,5-Trimethylpyrazol-4-yl, X = O, $R^2$ = $CH_3$, $R^3$ = $OCH_3$ und Z = CH,

$a_3$) $R^{1'}$ = H, $R^1$ = 5-Chloro-1,3-dimethyl-pyrazol-4-yl, X = O, $R^2$ = $CH_3$, $R^3$ = $OCH_3$ und Z = N,

$a_4$) $R^{1'}$ = H, $R^1$ = 1,3-Dimethyl-5-difluoromethoxy-pyrazol-4-yl, X = O, $R^2$ = $CH_3$, $R^3$ = $OCH_3$ und Z = N,

$a_5$) $R^{1'}$ = H, $R^1$ = 2-Methoxycarbonyl-phenylmethyl, X = O, $R^2$ = $CH_3$, $R^3$ = $OCH_3$ und Z = N bedeuten, enthalten.

4. Herbizide Mittel, gemäß einem oder mehreren der Ansprüche 1 bis 3, dadurch gekennzeichnet, daß das Mischungsverhältnis der Verbindungen der Formel I zu den Verbindungen der Formel II im Bereich zwischen 1000:1 bis 1:10 variiert.

5. Verfahren zur Bekämpfung von Schadpflanzen, dadurch gekennzeichnet, daß man auf diese oder die Anbaufläche ein herbizides Mittel gemäß einem oder mehreren der Ansprüche 1 bis 4 in einer wirksamen Menge appliziert.

6. Verwendung von herbiziden Mitteln gemäß einem oder mehreren der Ansprüche 1 bis 4 zur Bekämpfung von Schadpflanzen.

**Revendications**

1. Produits herbicides caractérisés en ce qu'ils contiennent une matière active de formule I ou l'un de ses sels:

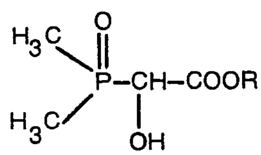
(I),

formule dans laquelle R représente l'hydrogène ou un alkyle éventuellement porteur d'un ou de plusieurs substituants pris dans l'ensemble constitué par les halogènes, l'hydroxy, les alcoxy en $C_1$—$C_4$ et les ($C_1$—$C_4$)alcoxy-carbonyles, en association avec un composé répondant à la formule II ou avec l'un de ses sels:

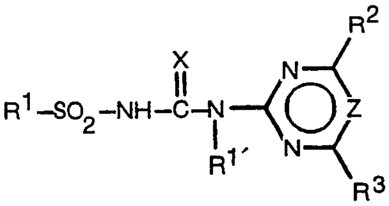
(II),

formule dans laquelle

$R^1$ représente:

— un alkyle en $C_1$—$C_4$, un alcényle en $C_2$—$C_6$ ou un alcynyle en $C_2$—$C_6$, qui peuvent être halogénés,

— un ($C_1$—$C_4$)alkylamino, un di-($C_1$—$C_4$-alkyl)amino ou un [N-($C_1$—$C_4$-alkylsulfonyl)-N-($C_1$—$C_4$-alkyl)]-amino, dont les alkyles peuvent être halogénés,

— un phényle, un benzyle, un phénoxy, un pyrazolyle ou un thiényle, qui peuvent tous porter un alkyle en $C_1$—$C_4$, un alcényle en $C_2$—$C_6$, un alcynyle en $C_2$—$C_6$ ou un alcoxy en $C_1$—$C_4$, eux-mêmes tous éventuellement porteur d'un halogène ou d'un ($C_1$—$C_4$-alcoxy)-carbonyle, un halogène, un radical $CF_3$, un nitro, un radical de formule —$COOR^4$ dans lequel:

$R^4$ représente H, un alkyle en $C_1$—$C_4$, un alcényle en $C_2$—$C_6$, un alcynyle en $C_2$—$C_6$, un ($C_1$—$C_4$)alcoxy-($C_1$—$C_4$)alkyle ou un halogéno-alkyle en $C_1$—$C_4$, un radical de formule —$S(O)_nR^5$ dans lequel:

$R^5$ représente un alkyle $C_1$—$C_4$, un alcoxy en $C_1$—$C_4$, un halogénoalkyle en $C_1$—$C_4$, un ($C_1$—$C_4$)alcoxy-($C_1$—$C_4$)alkyle, un ($C_1$—$C_4$)alcoxy-carbonyl-($C_1$—$C_4$)-alkyle, un di-($C_1$—$C_4$-alkyl)-amino, un ($C_1$—$C_4$)alkyl-amino ou un ($C_1$—$C_4$)alcoxy-($C_1$—$C_4$)alkylamino, n est égal à 0, à 1 ou à 2,

$R^{1'}$ représente H, un alkyle en $C_1$—$C_4$ ou un alcényle en $C_1$—$C_4$,

$R^2$ et $R^3$ représentent chacun, indépendamment l'un de l'autre, un alklye en $C_1$—$C_4$, un alcoxy en $C_1$—$C_4$, tous deux éventuellement porteurs d'un ou plusieurs substituants pris dans l'ensemble constitué par les halogènes, les alcoxy en $C_1$—$C_4$ et les ($C_1$—$C_4$)alcoxy-carbonyles, un alcényle en $C_2$—$C_6$, un alcynyle en $C_2$—$C_6$, un alcényloxy en $C_2$—$C_6$, un alcynyloxy en $C_2$—$C_6$ ou un halogène,

X représente O, S ou un radical $NR^6$ dans lequel

$R^6$ représente un alkyle en $C_1$—$C_4$ ou un alcoxy en $C_1$—$C_4$, et

Z représente CH ou N,

sauf les composés dans lesquels $R^1$ représente un radical [($C_1$—$C_4$-alcoxy)-carbonyl]-2 phényle, $R^{1'}$ représente H et $R^2$ et $R^3$ représentent chacun un alkyle en $C_1$ ou $C_2$ ou un alcoxy en $C_1$ ou $C_2$.

2. Produits herbicides selon la revendication 1 caractérisés en ce qu'ils contiennent un matière active de formule I, ainsi que des sels d'une telle matière active, dans laquelle R représente l'hydrogène ou un alkyle en $C_1$—$C_4$, en association avec un composé de formule II dans lequel:

$R^1$ représente:

— un radical [N-($C_1$—$C_4$-alkylsulfonyl)-N-($C_1$—$C_4$alkyl)]-amino, dont chacun des alkyles peut être halogéné,

— un radical répondant à l'une des formules:

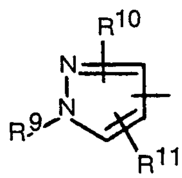

et

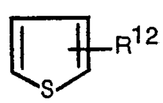

,

— un phényle, un phénoxy ou un benzyle, éventuellement porteurs d'un halogéne, d'un alkyle en $C_1$—$C_4$, d'un alcoxy en $C_1$—$C_4$ (ces deux derniers pouvant être halogénés), un radical de formule —$COOR^4$ ou un radical de formule —$S(O)_nR^{5'}$, radicaux dans lesquels:

$R^9$ représente H, ou alkyle en $C_1$—$C_4$, la revendication 1,

$R^{10}$ représente H, un alkyle en $C_1$—$C_4$, un alcoxy en $C_1$—$C_4$, un radical de formule —$COOR^4$ ou un radical de formule —$S(O)_nR^{5'}$,

$R^{5'}$ désigne un alkyle en $C_1$—$C_4$, un alcoxy en $C_1$—$C_4$, un halogénoalkyle en $C_1$—$C_4$, un alkylamino en $C_1$—$C_4$ ou un di-($C_1$—$C_4$-alkyl)-amino,

$R^{11}$ représente H, un halogène un alkyle en $C_1$—$C_4$ ou un alcoxy en $C_1$—$C_4$, ces deux derniers pouvant être halogénés, et

$R^{12}$ représente H, un halogène, un alkyle en $C_1$—$C_4$, un alcényle en $C_2$—$C_4$ ou un alcoxy en $C_1$—$C_4$, les trois derniers radicaux cités pouvant être halogénes, un radical de formule —$COOR^{4'}$ dans lequel $R^{4'}$ représente H, un alkyle en $C_1$—$C_4$ ou un alcényle en $C_2$—$C_6$, ou un radical de formule —$S(O)_n$—$R^{5'}$, et

X représente O.

3. Produits herbicides selon l'une des revendications 1 et 2, caractérisés en ce qu'ils contiennent, comme matière active, le sel sodique de formule I en association avec un composé de formule II dans lequel:

$a_1$) $R^{1'}$ = H, $R^1$ = $(CH_3SO_2)(CH_3)N$—, $R^2$ = $R^3$ = $OCH_3$ et Z = CH,

$a_2$) $R^{1'}$ = H, $R^1$ = triméthyl-1,3,5 pyrazolyle-4, X = O, $R^2$ = $CH_3$, $R^3$ = $OCH_3$ et Z = CH,

$a_3$) $R^{1'}$ = H, $R^1$ = chloro-5 dimethyl-1,3 pyrazolyle-4, X = O, $R^2$ = $CH_3$, $R^3$ = $OCH_3$ et Z = N,

$a_4$) $R^{1'}$ = H, $R^1$ = diméthyl-1,3 difluorométhoxy-5 pyrazolyle-4, X = O, $R^2$ = $CH_3$, $R^3$ = $OCH_3$ et Z = N,

$a_5$) $R^{1'}$ = H, $R^1$ = méthoxycarbonyl-2 phénylméthyle, X = O, $R^2$ = $CH_3$, $R^3$ = $OCH_3$ et Z = N.

4. Produits herbicides selon l'une quelconque des revendications 1 à 3, caractérisé en ce que, dans le mélange, le rapport entre les composés de formule I et les composés de formule II est compris entre 1000:1 et 1:10.

5. Procédé pour combattre des plantes nuisibles, procédé caractérisé en ce qu'on applique sur celles-ci, ou sur la surface de culture, un produit herbicide selon l'une quelconque des revendications 1 à 4, en une quantité efficace.

6. Application de produits herbicides selon l'une quelconque des revendications 1 à 4 à la lutte contre des plantes nuisibles.

**Claims**

1. A herbicidal agent which contains an active ingredient of the formula I or its salt

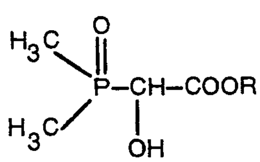

(I),

wherein R denotes hydrogen or alkyl which is optionally monosubstituted or polysubstituted by halogen, hydroxyl, $(C_1—C_4)$-alkoxy or $(C_1—C_4)$-alkoxycarbonyl, in combination with a compound of the formula II or its salt

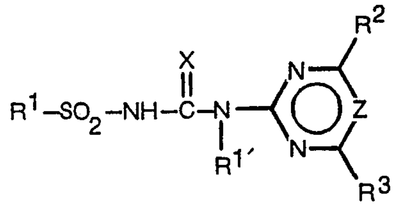 (II),

wherein

$R^1$ denotes $(C_1—C_4)$-alkyl, $(C_2—C_6)$alkenyl or $(C_2—C_6)$alkynyl, each of which can be halogenated $(C_1—C_4)$alkylamino, di-$(C_1—C_4$-alkyl)-amino, [N-$(C_1—C_4$-alkylsulfonyl)-N-$(C_1—C_4)$]-amino, wherein the alkyl radicals can be halogenated, phenyl, benzyl, phenoxy, pyrazolyl or thienyl, all of which can be substituted by $(C_1—C_4)$-alkyl, $(C_2—C_6)$-alkenyl, $(C_2—C_6)$-alkynyl or $(C_1—C_4)$-alkoxy, all of which can be substituted by halogen or $(C_1—C_4$-alkoxy)-carbonyl, or by halogen, $CF_3$, nitro, a radical of the formula $—COOR^4$, wherein

$R^4$ denotes H, $(C_1—C_4)$-alkyl, $(C_2—C_6)$-alkenyl, $(C_2—C_6)$-alkynyl, $(C_1—C_4)$-alkoxy-$(C_1—C_4)$-alkyl or halogeno-$(C_1—C_4)$-alkyl, or by a radical of the formula $—S(O)_nR^5$, wherein $R_5$ denotes $(C_1—C_4)$-alkyl, $(C_1—C_4)$-alkoxy, halogeno-$(C_1—C_4)$-alkyl, $(C_1—C_4)$-alkoxy-$(C_1—C_4)$-alkyl, $(C_1—C_4)$-alkoxycarbonyl-$(C_1—C_4)$-alkyl, di-$(C_1—C_4$-alkyl)-amino, $(C_1—C_4)$-alkylamino or $(C_1—C_4)$-alkoxy-$(C_1—C_4)$-alkylamino and n denotes 0, 1 or 2,

$R^{1'}$ denotes H, $(C_1—C_4)$-alkyl or $(C_1—C_4)$-alkenyl,

$R^2$ and $R^3$ independently of one another denote $(C_1—C_4)$-alkyl or $(C_1—C_4)$-alkoxy, both of which are optionally monosubstituted or polysubstituted by halogen, $(C_1—C_4)$-alkoxy or $(C_1—C_4)$-alkoxycarbonyl, or denote $(C_2—C_6)$-alkenyl, $(C_2—C_6)$-alkynyl, $(C_2—C_6)$-alkenyloxy, $(C_2—C_6)$-alkynyloxy or halogen,

X denotes O, S or $NR^6$ in which $R^6$ denotes $(C_1—C_4)$-alkyl or $(C_1—C_4)$-alkoxy, and

Z denotes CH or N, with the exception of compounds in which $R^1$ = ortho-2-[$(C_1—C_4$-alkoxy)-carbonyl]-phenyl, $R^{1'}$ = H and $R^2$ and $R^3$ = $(C_1—C_2)$-alkyl or $(C_1—C_2)$-alkoxy.

2. A herbicidal agent as claimed in Claim 1, which contains an active ingredient of the formula I and its salts, wherein

R denotes hydrogen or $(C_1—C_4)$-alkyl, in combination with a compound of the formula II, wherein $R^1$ denotes [N-$(C_1—C_4$-alkylsulfonyl)-N-$(C_1—C_4$-alkyl)]-amino, in which the alkyl radicals can each be halogenated, a radical of the formulae

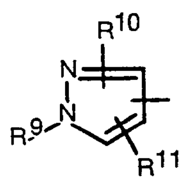 or 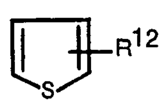 ,

phenyl, phenoxy or benzyl, which can be substituted by halogen, $(C_1—C_4)$-alkyl or $(C_1—C_4)$-alkoxy, both of which can be halogenated, or a radical of the formulae $—COOR^4$ or $—S(O)_nR^{5'}$ and wherein

$R^9$ is hydrogen or $(C_1—C_4)$-alkyl,

$R^{10}$ denotes H, $(C_1—C_4)$-alkyl, $(C_1—C_4)$-alkoxy, a radical of the formula $—COOR^4$ or $—S(O)_nR^{5'}$,

$R^{5'}$ denotes $(C_1—C_4)$-alkyl, $(C_1—C_4)$-alkoxy, halogeno-$(C_1—C_4)$-alkyl, $(C_1—C_4)$-alkylamino or di$(C_1—C_4$-alkyl)-amino,

$R^{11}$ denotes H, halogen, $(C_1—C_4)$-alkyl or $(C_1—C_4)$-alkoxy, both of which can be halogenated, and

$R^{12}$ denotes H, halogen, $(C_1—C_4)$-alkyl, $(C_2—C_4)$-alkenyl or $(C_1—C_4)$-alkoxy, where the three last mentioned radicals may all be halogenated, a radical of the formula $—COOR^{4'}$, in which $R^{4'}$ = H, $(C_1—C_4)$-alkyl or $(C_2—C_6)$-alkenyl, or a radical of the formula $—S(O)_n—R^{5'}$, and

X denotes O.

3. A herbicidal agent as claimed in one or more of claims 1 and 2, which contains, as an active ingredient, the Na salt of the formula I in combination with a compound of the formula II, wherein

$a_1$) $R^{1'}$ denotes H, $R^1$ denotes $(CH_3SO_2)(CH_3)N—$, $R^2$ and $R^3$ denote $OCH_3$ and Z denotes CH,

$a_2$) $R^{1'}$ denotes H, $R^1$ denotes 1,3,5-trimethylpyrazol-4-yl, X denotes O, $R^2$ denotes $CH_3$, $R^3$ denotes $OCH_3$ and Z denotes CH,

$a_3$) $R^{1'}$ denotes H, $R^1$ denotes 5-chloro-1,3-dimethyl-pyrazol-4-yl, X denotes O, $R^2$ denotes $CH_3$, $R^3$ denotes $OCH_3$ and Z denotes N,

$a_4$) $R^{1'}$ denotes H, $R^1$ denotes 1,3-dimethyl-5-difluoromethoxypyrazol-4-yl, X denotes O, $R^2$ denotes $CH_3$, $R^3$ denotes $OCH_3$ and Z denotes N,

$a_5$) $R^{1'}$ denotes H, $R^1$ denotes 2-methoxycarbonylphenylmethyl, X denotes O, $R^2$ denotes $CH_3$, $R^3$ denotes $OCH_3$ and Z denotes N.

4. A herbicidal agent as claimed in one or more of claims 1 to 3, wherein the mixing ratio of the

compounds of the formula I to the compounds of the formula II varies in the range between 1000:1 and 1:10.

5. A method of controlling harmful plants, wherein a herbicidal agent according to one or more of claims 1 to 4 is applied in an effective amount of these plants or the cultivated area.

6. Use of a herbicidal agent as claimed in one or more of claims 1 to 4 for controlling harmful plants.